(19) **Europäisches Patentamt / European Patent Office / Office européen des brevets**

(11) **EP 4 259 472 B1**

(12) **FASCICULE DE BREVET EUROPEEN**

(45) Date de publication et mention de la délivrance du brevet:
**13.05.2026 Bulletin 2026/20**

(21) Numéro de dépôt: **21831281.7**

(22) Date de dépôt: **07.12.2021**

(51) Classification Internationale des Brevets (IPC):
**B60L 50/75** (2019.01)   **B60L 58/30** (2019.01)
**H01M 8/04228** (2016.01)   **H01M 8/04303** (2016.01)
**H01M 8/04537** (2016.01)   **H01M 8/04955** (2016.01)
**H01M 16/00** (2006.01)

(52) Classification Coopérative des Brevets (CPC):
**B60L 58/30; B60L 50/75; H01M 8/04228; H01M 8/04303; H01M 8/04559; H01M 8/04955; H01M 16/006;** B60L 2210/14; H01M 2250/20; Y02E 60/10; Y02E 60/50; Y02T 10/70; Y02T 10/72; Y02T 90/40

(86) Numéro de dépôt international:
**PCT/EP2021/084644**

(87) Numéro de publication internationale:
**WO 2022/122757 (16.06.2022 Gazette 2022/24)**

(54) **PROCÉD DE DÉCHARGE D'UNE PILE À COMBUSTIBLE D'ALIMENTATION D'UNE MACHINE ÉLECTRIQUE DE TRACTION D'UN VÉHICULE AUTOMOBILE**

**VERFAHREN ZUM ENTLADEN EINES BRENNSTOFFZELLENSTAPELS ZUR STROMVERSORGUNG EINER ELEKTRISCHEN TRAKTIONSMASCHINE EINES KRAFTFAHRZEUGS**

**METHOD FOR DISCHARGING A FUEL-CELL STACK FOR SUPPLYING POWER TO A TRACTION ELECTRIC MACHINE OF A MOTOR VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2020 FR 2012910**

(43) Date de publication de la demande:
**18.10.2023 Bulletin 2023/42**

(73) Titulaire: **Ampere SAS**
**92100 Boulogne-Billancourt (FR)**

(72) Inventeurs:
- **GERARD, David**
  **78084 Guyancourt (FR)**
- **LOUDOT, Serge**
  **78084 Guyancourt cedex (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
CA-A1- 2 710 921    JP-A- 2011 090 823
JP-A- 2017 130 293    US-A1- 2019 221 872

## Description

## Domaine technique de l'invention

La présente invention concerne le domaine des piles à combustible à hydrogène.

L'invention concerne plus particulièrement un procédé de décharge d'une pile à combustible suite à une interruption, volontaire ou en urgence, de l'alimentation en hydrogène de la pile à combustible.

## Arrière-plan technique

Les piles à combustible à hydrogène sont utilisées comme source d'énergie électrique dans de nombreuses applications, et notamment dans le domaine des transports.

Certains véhicules automobiles dits « électriques » sont équipés d'une pile à combustible utilisée en combinaison avec une batterie haute tension pour alimenter notamment la chaine de traction électrique du véhicule automobile comportant au moins une machine électrique de traction.

Plus précisément, les véhicules automobiles à pile à combustible sont propulsés par de l'électricité résultant d'une réaction électrochimique entre de l'hydrogène, qui est par exemple stocké dans un réservoir, et l'oxygène contenu dans l'air.

Dans une telle architecture, la batterie haute tension constitue la source d'alimentation électrique principale et la pile à combustible à hydrogène constitue la source d'alimentation secondaire ou bien auxiliaire. La pile à combustible appartient donc à un système dit « prolongateur d'autonomie » qui est prévu et conçu pour prolonger l'autonomie de la batterie haute tension.

Une telle architecture constitue une plateforme multi-énergies et permet l'implantation d'une batterie haute tension dont la taille est réduite. En effet, la batterie haute tension est alors dimensionnée pour assurer l'usage dit normal du véhicule et la source d'énergie auxiliaire est configurée pour assurer des usages dits exceptionnels du véhicule, par exemple dans le cas d'un trajet très long.

Cette architecture appelée multi-énergies est avantageuse pour les véhicules automobiles à propulsion au moins partiellement électrique de type utilitaire car il existe un compromis entre l'autonomie du véhicule, la masse transportable et le volume disponible.

Il existe également des véhicules automobiles dont l'architecture est composée d'une pile à combustible à hydrogène de grande puissance prévue pour alimenter directement la chaîne de traction du véhicule automobile électrique.

De manière générale, l'interruption de l'alimentation en carburant d'une pile à combustible à hydrogène, c'est-à-dire en hydrogène, peut être provoquée par l'arrêt du contact du véhicule, on parle alors d'un arrêt volontaire ou classique, ou bien suite à un quelconque dysfonctionnement du véhicule ou encore lors d'un accident, et on parle alors d'un arrêt d'urgence.

Suite à l'interruption de l'alimentation de la pile à combustible, constituant un arrêt volontaire ou un arrêt d'urgence, le débit d'hydrogène décroît puis atteint une valeur nulle, le volume d'hydrogène résiduel contenu à l'intérieur de la pile à combustible étant alors très faible.

Toutefois, un résidu d'hydrogène apte à produire une énergie résiduelle de la pile à combustible est présent dans le volume du « stack » de la pile à combustible formé par un empilement de cellules électrochimiques. L'énergie résiduelle doit être totalement consommée afin d'atteindre une valeur nulle de la tension de la pile à combustible et permettre ainsi de sécuriser le système de pile à combustible, et de manière générale le véhicule.

Dans l'état de la technique, il existe des systèmes prévus pour décharger l'énergie résiduelle de la pile à combustible jusqu'à l'obtention d'une valeur nulle de la tension de la pile à combustible.

Cependant, la fonction de décharge de l'énergie résiduelle à l'intérieur de la pile à combustible est généralement assurée par un ou plusieurs commutateurs mécaniques ou électroniques associés à un ou plusieurs éléments dissipatifs tels que des résistances ou des varistances. Ces composants additionnels dédiés à la décharge sont classiquement connectés électriquement en parallèle avec la pile à combustible.

Par exemple, le document US5105142 décrit un système de décharge d'une pile à combustible au moyen de multiples commutateurs et de résistances connectés électriquement en parallèle. La connexion successive de résistances en parallèle permet de piloter l'impédance de charge de la pile à combustible en formant ainsi un moyen de pilotage de la décharge de la pile à combustible en fonction de la masse et la pression d'hydrogène résiduel. L'inconvénient de cette solution est l'encombrement provoqué par les multiples résistances et relais électromécaniques. De plus, ce principe est avant tout dédié à des applications stationnaires.

Chacun des documents US2019379070 et WO2020020524 propose un système de décharge composé de relais électromécaniques associés à une résistance et connectés électriquement en parallèle avec la pile à combustible.

Cependant, ces différents systèmes de décharge d'une pile à combustible présentent certains inconvénients. Tout d'abord, les composants assurant la fonction de décharge, c'est-à-dire la combinaison de commutateurs et d'éléments dissipatifs, sont uniquement dédiés à cette fonction. Une quelconque défaillance de ces composants peut provoquer une panne générale du système de la pile à combustible du fait de leur raccordement électrique en parallèle à la pile à combustible, une telle défaillance impliquant alors des coûts élevés de réparation.

L'invention propose notamment de remédier aux inconvénients mentionnés et de proposer un procédé de décharge de l'énergie résiduelle à l'intérieur de la pile à combustible assuré par un nombre de composants et un encombrement réduits.

## Résumé de l'invention

L'invention propose un procédé de décharge du circuit électrique d'un véhicule automobile comportant au moins une machine électrique de traction du véhicule équipé :

- d'un réseau d'alimentation électrique comportant :

  -- une batterie haute tension,
  -- un système prolongateur d'autonomie comprenant une pile à combustible à hydrogène qui est associée à un convertisseur de tension continu / continu lui-même comportant une inductance de filtrage traversée par un courant de l'inductance de filtrage, une capacité de filtrage primaire qui est à la tension de la pile à combustible à hydrogène, et une capacité de filtrage secondaire qui est à la tension de sortie du convertisseur de tension continu / continu,

- d'un réseau haute tension de consommation, alimenté par le réseau d'alimentation électrique, comprenant la au moins une machine électrique de traction du véhicule automobile associée à un onduleur et des équipements annexes,
- et d'un module de pilotage.

Le procédé de décharge comprend les étapes successives suivantes :

- arrêt du véhicule automobile,
- déconnexion électrique de la batterie haute tension du réseau haute tension,
- interruption de l'alimentation en hydrogène de la pile à combustible à hydrogène, et
- décharge de l'énergie du circuit électrique dans le bobinage statorique de la machine électrique de traction.

Le procédé de décharge est caractérisé en ce que l'étape de décharge de l'énergie du circuit électrique est réalisée par pilotage du convertisseur de tension continu / continu au moyen du module de pilotage.
Selon d'autres caractéristiques de l'invention :

- l'étape d'arrêt du véhicule correspond à un arrêt volontaire du véhicule automobile, l'étape de décharge de l'énergie du circuit électrique comporte les sous-étapes successives suivantes :

  -- décharge de l'énergie produite par consommation de l'hydrogène résiduel contenu dans la pile à combustible à hydrogène par le convertisseur de tension continu / continu par pilotage d'un courant de décharge par le module de pilotage jusqu'à une valeur seuil de tension prédéterminée de la pile à combustible à hydrogène,
-- déconnexion électrique du système prolongateur d'autonomie du réseau haute tension de consommation,
-- décharge de l'énergie des capacités du réseau haute tension de consommation dans le stator de la machine électrique de traction par l'onduleur,

l'étape de décharge de l'énergie du circuit électrique comporte une sous-étape, qui est réalisée en parallèle des deux sous-étapes précédentes, de décharge de l'énergie des capacités de filtrage primaire et secondaire du convertisseur de tension continu / continu par pilotage du courant de l'inductance de filtrage par le module de pilotage ;

- l'étape d'arrêt du véhicule correspond à un arrêt d'urgence du véhicule automobile, préalablement à l'étape de décharge de l'énergie du circuit électrique, le procédé de décharge du circuit électrique comporte une étape de déconnexion électrique du système prolongateur d'autonomie du réseau haute tension réalisée simultanément avec l'étape de déconnexion électrique de la batterie haute tension du réseau haute tension de consommation, l'étape de décharge de l'énergie du circuit électrique comporte les sous-étapes suivantes :

  -- décharge de l'énergie des capacités du réseau haute tension de consommation dans le stator de la machine électrique de traction par l'onduleur,
  --l'étape de décharge de l'énergie du circuit électrique comporte une sous-étape, qui est réalisée en parallèle de la sous-étape précédente, de décharge de l'hydrogène résiduel contenu dans la pile à combustible à hydrogène et de décharge de l'énergie des capacités de filtrage primaire et secondaire du convertisseur de tension continu / continu par pilotage du courant de l'inductance de filtrage par le module de pilotage ;

- le processus de pilotage du courant de l'inductance de filtrage par le module de pilotage est configuré pour atteindre une valeur faible de la tension de la pile à combustible à hydrogène au moyen d'une succession de n cycles d'autodécharge des capacités de filtrage primaire et secondaire du système prolongateur d'autonomie;
- chaque cycle d'autodécharge des capacités de filtrage primaire et secondaire du système prolongateur d'autonomie comporte :

-- une étape de pilotage du convertisseur de tension continu / continu du système prolongateur d'autonomie par le module de pilotage du convertisseur de tension continu / continu pour obtenir une valeur positive du courant de l'inductance de filtrage, la valeur positive du courant de l'inductance de filtrage fourni par la capacité de filtrage primaire à la capacité de filtrage secondaire provoquant :

--- la décroissance de la valeur de la tension de la pile à combustible à hydrogène, et
--- la croissance de la valeur de la tension de sortie du convertisseur de tension continu / continu ; et

-- une étape de pilotage du convertisseur de tension continu / continu du système prolongateur d'autonomie par le module de pilotage pour obtenir une valeur négative du courant de l'inductance de filtrage, la valeur négative du courant de l'inductance de filtrage fourni par la capacité de filtrage secondaire à la capacité de filtrage primaire provoquant :

--- la décroissance de la valeur de la tension de sortie du convertisseur de tension continu / continu, et
--- la croissance de la valeur de la tension de la capacité de filtrage primaire ;

- et le processus de pilotage du courant de l'inductance de filtrage par le module de pilotage est configuré pour que la valeur de la tension de la pile à combustible à hydrogène à la fin d'un cycle de n+1 autodécharges soit inférieure à la valeur de la tension de la pile à combustible à hydrogène à la fin du cycle de n autodécharges.

**Brève description des figures**

D'autres caractéristiques et avantages de l'invention apparaitront au cours de la lecture de la description détaillée qui va suivre pour la compréhension de laquelle on se reportera aux dessins annexés dans lesquels :

[Fig.1] - la figure 1 est un schéma électrique de l'architecture d'un véhicule automobile électrique comprenant un système prolongateur d'autonomie selon l'invention, en fonctionnement normal de la pile à combustible ;
[Fig.2] - la figure 2 est un schéma électrique de l'architecture d'un véhicule automobile électrique selon la figure 1, en fonctionnement de décharge de l'énergie résiduelle de la pile à combustible suite à un arrêt volontaire de l'alimentation de la pile à combustible ;

[Fig.3] - la figure 3 est un diagramme des étapes du procédé de décharge du circuit électrique du véhicule automobile électrique suite à un arrêt classique de l'alimentation de la pile à combustible ;
[Fig.4] - la figure 4 est un schéma électrique de détail du système prolongateur d'autonomie selon la figure 2, en fonctionnement de décharge de l'énergie résiduelle de la pile à combustible suite à un arrêt d'urgence de l'alimentation de la pile à combustible ;
[Fig.5] - la figure 5 est un diagramme des étapes du procédé de décharge du circuit électrique du véhicule automobile électrique suite à un arrêt d'urgence de l'alimentation de la pile à combustible ;
[Fig.6] - la figure 6 est une représentation graphique du processus d'autodécharge des capacités de filtrage primaire et secondaire du système prolongateur d'autonomie suite à un arrêt d'urgence de l'alimentation de la pile à combustible.

**Description détaillée de l'invention**

Dans la description qui va suivre, des éléments identiques, similaires ou analogues seront désignés par les mêmes références alphanumériques.

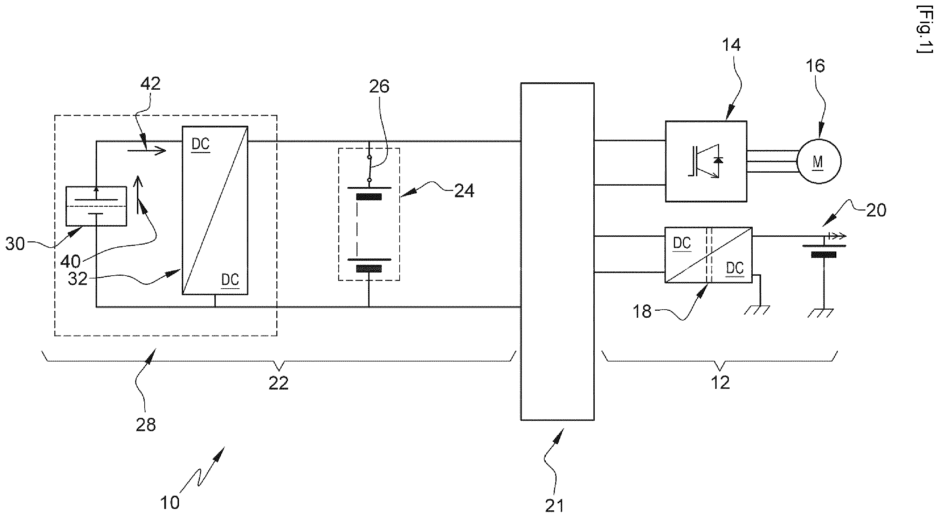

La figure 1 est un schéma du circuit électrique 10 de l'architecture d'un véhicule automobile électrique comportant un réseau haute tension 12 dit de consommation qui est alimenté électriquement par un réseau d'alimentation électrique 22.
Le réseau d'alimentation électrique 22 est composé d'une source principale d'alimentation et d'une source auxiliaire d'alimentation qui sont connectées électriquement l'une à l'autre en parallèle.
Le réseau d'alimentation électrique 22 est composé d'une batterie haute tension 24 constituant la source principale d'alimentation et d'un système prolongateur d'autonomie 28 constituant la source auxiliaire d'alimentation. Le système prolongateur d'autonomie 28 comporte une pile à combustible à hydrogène 30 associée à un convertisseur de tension continu / continu 32 du système prolongateur d'autonomie 28 agencé à la sortie de la pile à combustible à hydrogène 30.
Le convertisseur de tension continu / continu 32 du système prolongateur d'autonomie 28 constitue un élévateur de tension permettant d'adapter la valeur de la tension fournie par la pile à combustible à hydrogène 30 à la tension du réseau haute tension de consommation 12 du véhicule automobile électrique.
La batterie haute tension 24 est la source principale d'énergie électrique et alimente majoritairement le réseau haute tension de consommation 12. En effet, la batterie haute tension 24 est dimensionnée pour assurer l'usage normal du véhicule automobile « électrique » ponctué par des phases régulières de recharge de la batterie haute tension 24.
La batterie haute tension 24 est équipée d'au moins un commutateur principal 26 de la batterie haute tension 24 prévu pour connecter ou déconnecter électriquement la batterie haute tension 24 du réseau haute tension de consommation 12 entre une position de connexion ou de déconnexion du commutateur principal 26 de la batterie haute tension 24. La pile à combustible à hydrogène 30 associée au convertisseur de tension continu / continu 32 du système prolongateur d'autonomie 28 constitue une source d'énergie additionnelle implantée dans le réseau d'alimentation électrique 22 composée initialement de la batterie haute tension 24.

La pile à combustible à hydrogène 30 qui est à une valeur de tension 40 fournit un courant 42 de la pile à combustible à hydrogène 30.

Le système prolongateur d'autonomie 28 communément appelé en anglais « Range extender » est prévu pour prolonger l'autonomie d'utilisation de la batterie haute tension 24.

Le réseau haute tension de consommation 12 alimente une machine électrique de traction 16 appartenant à la chaîne de traction du véhicule ainsi que des éléments consommateurs d'électricité tels que des équipements annexes 20.

De manière conventionnelle, la machine électrique de traction 16 comprend un stator associé à un bobinage statorique de la machine électrique de traction 16.

Le réseau d'alimentation électrique 22 du véhicule automobile électrique est relié électriquement au réseau haute tension de consommation 12 au moyen d'un boîtier de distribution 21.

Un onduleur 14 est agencé électriquement en amont de la machine électrique de traction 16 en assurant un rôle de régulateur de tension pour ainsi fournir la tension requise pour alimenter la machine électrique de traction 16.

Les équipements annexes 20 sont connectés électriquement au boitier de distribution 21 par le biais d'un convertisseur de tension 18 du réseau haute tension de consommation 12 prévu pour diminuer la tension et ainsi alimenter les équipements annexes 20 en basse tension.

Le boitier de distribution 21 redistribue la haute tension 22 d'une part à l'onduleur 14 pour alimenter la machine électrique de traction 16 et d'autre part au convertisseur de tension 18 du réseau haute tension de consommation 12 pour alimenter les équipements annexes 20. D'autres éléments non représentés peuvent être aussi reliés au boitier de distribution 21.

L'architecture présentée à la figure 1 concerne un véhicule automobile dont la chaîne de traction du réseau haute tension de consommation 12 est majoritairement alimentée par la batterie haute tension 24 lors de l'usage normal du véhicule.

Lorsque le commutateur principal 26 de la batterie haute tension 24 est dans une position de connexion, la batterie haute tension 24 alimente le réseau d'alimentation électrique 22 du véhicule comprenant la chaîne de traction. Lorsque la batterie haute tension 24 est totalement déchargée, la source auxiliaire d'alimentation composée de la pile à combustible à hydrogène 30 est démarrée et elle produit la puissance électrique nécessaire à l'avancement du véhicule, en fonctionnement normal de la pile à combustible à hydrogène 30.

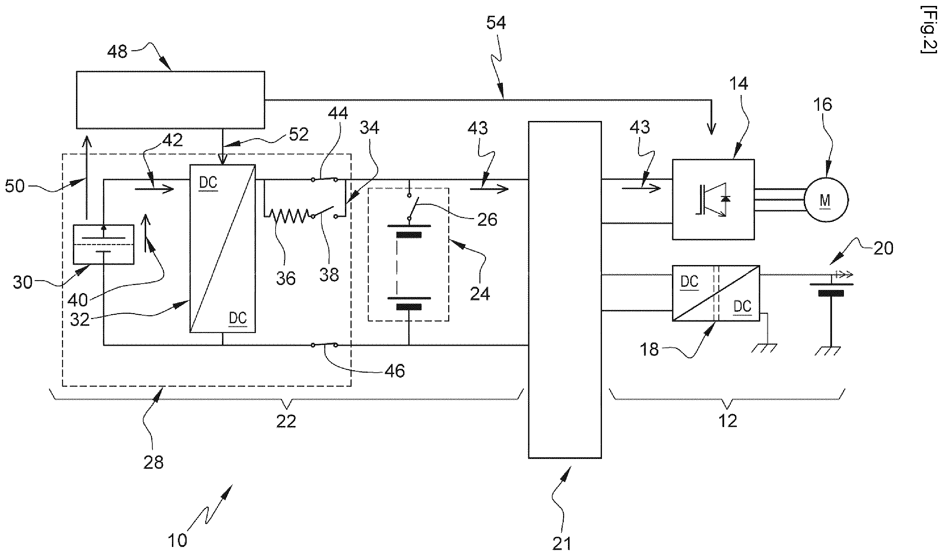

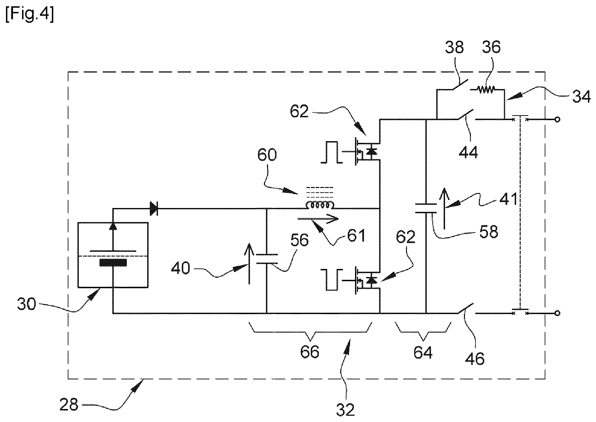

Les schémas électriques de l'architecture d'un véhicule des figures 2 et 4 détaillent le schéma électrique du système prolongateur d'autonomie 28.

Le système prolongateur d'autonomie 28 constitue une seconde source d'alimentation qui comporte :

- un circuit de précharge 34 comprenant une résistance de précharge 36 associée à un commutateur de précharge 38 prévu pour assurer la connexion / déconnexion du système prolongateur d'autonomie 28 au réseau d'alimentation électrique 22, et
- deux commutateurs principaux dont un premier commutateur principal 44 et un deuxième commutateur principal 46, et
- un module de pilotage 48 du convertisseur de tension continu / continu 32 qui est notamment configuré pour piloter le processus de décharge de l'énergie résiduelle produite par la pile à combustible à hydrogène 30 suite à une interruption de l'alimentation en hydrogène de la pile à combustible à hydrogène 30.

Le module de pilotage 48 reçoit des informations de la pile à combustible à hydrogène 30 définissant l'état 50 de la pile à combustible à hydrogène 30 telles que par exemple la quantité d'hydrogène résiduelle contenue dans la pile à combustible à hydrogène 30 et la tension de sortie 41 du convertisseur de tension continu / continu 32 qui est également la tension de la batterie haute tension 24. Le module de pilotage 48 est configuré pour, en fonction de l'état 50 de la pile à combustible à hydrogène 30, envoyer :

- une valeur de consigne 52 de courant 42 de la pile à combustible à hydrogène 30 au convertisseur de courant continu / continu 32,
- et une valeur consigne 54 de courant de décharge 43 à l'onduleur 14.

Le convertisseur de tension continu / continu 32 tel que détaillé à la figure 4 est constitué d'un étage d'entrée basse tension 66 et d'un étage de sortie haute tension 64.

L'étage d'entrée basse tension 66 comporte une capacité de filtrage primaire 56 qui est à la tension 40 de la pile à combustible à hydrogène 30 lorsqu'elle débite du courant, et une inductance de filtrage 60 traversée par un courant 61 de l'inductance de filtrage 60.

L'étage de sortie haute tension 64 comporte une capacité de filtrage secondaire 58 qui est à la tension de sortie 41 du convertisseur de tension continu / continu 32.

Deux semi-conducteurs commandables, par exemple des transistors 62, sont agencés entre les étages basse tension 66 et haute tension 64 et font partie du module de pilotage 48 du convertisseur de tension continu / continu 32. Ces composants constituent un système de sécurité requis pour isoler toutes les sources d'alimentation haute tension.

L'ensemble du circuit électrique 10 de l'architecture d'un véhicule automobile à traction au moins partiellement électrique comporte des condensateurs tels que ceux présents dans le convertisseur de tension continu / continu 32, l'onduleur 14, et d'autres composants électriques annexes connectés électriquement en parallèle. Chacun de ces différents condensateurs a une capacité pouvant être relativement importante, la capacité étant proportionnelle à la quantité de charge électrique pouvant être stockée dans le condensateur pour une certaine tension.

La capacité de filtrage primaire 56 est conçue pour supprimer le bruit au-delà du convertisseur de tension continu / continu 32 du système prolongateur d'autonomie 28. La capacité de filtrage secondaire 58 est conçue pour ne pas empêcher la génération de surtensions et donc la génération de bruit. Le circuit de précharge 34 est donc nécessaire car lorsque les capacités de filtrage 56, 58 sont déchargées, il est dangereux de les connecter à la batterie haute tension 24. La résistance de précharge 36 et le commutateur de précharge 38 sont nécessaires pour créer un état transitoire de précharge qui limite le courant transféré entre la batterie haute tension 24 et les capacités.

Dans un premier temps, le deuxième commutateur principal 46 et le commutateur de précharge 38 sont fermés pour connecter électriquement en parallèle les condensateurs et la batterie haute tension 24 chargés à des tensions différentes, au moyen de la résistance de précharge 36 permettant ainsi de limiter le courant.

Puis, dans un second temps, lorsque la tension de sortie 41 du convertisseur de tension continu / continu 32 est égale à la tension de la batterie haute tension 24, le commutateur de précharge est ouvert et le commutateur principal 44 est fermé pour connecter électriquement en parallèle directement les deux commutateurs principaux 44 et 46, et les tensions de part et d'autre sont alors équilibrées suite à l'état transitoire de précharge. La batterie haute tension 24 comporte aussi des commutateurs principaux et un circuit de précharge non représentés et semblables aux commutateurs principaux 44, 46 et au circuit de précharge 34 du système prolongateur d'autonomie 28 prévus pour assurer la connexion / déconnexion de la batterie haute tension 24 au réseau d'alimentation électrique 22.

Les figures 2 et 4 présentent le schéma électrique de l'architecture d'un véhicule suite à l'interruption de l'alimentation en hydrogène de la pile à combustible à hydrogène 30 suite à une étape E0 d'arrêt du véhicule automobile.

L'interruption de l'alimentation de la pile à combustible à hydrogène 30 illustrée à la figure 2 est provoquée par l'arrêt du contact du véhicule automobile électrique, et on parle alors d'un arrêt volontaire ou arrêt classique.

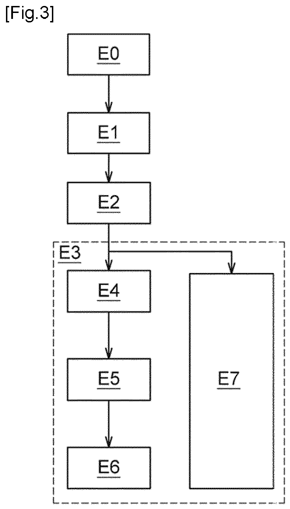

L'interruption de l'alimentation de la pile à combustible à hydrogène 30 illustrée à la figure 4 est provoquée par exemple par un dysfonctionnement du véhicule ou suite à un accident, et on parle alors d'un arrêt d'urgence. Dans ces deux cas, suite à l'interruption de l'alimentation en hydrogène de la pile à combustible à hydrogène 30, le débit hydrogène décroît puis atteint une valeur nulle. Cependant un volume très faible d'hydrogène résiduel reste contenu à l'intérieur de la pile à combustible à hydrogène 30. L'énergie résiduelle produite par la pile à combustible à hydrogène 30 en utilisant ce volume résiduel d'hydrogène doit être totalement consommée afin d'atteindre une valeur nulle de la tension 40 de la pile à combustible à hydrogène 30. La figure 3 est un diagramme des étapes du procédé de décharge du circuit électrique 10 lors d'un **arrêt volontaire** selon l'invention représenté à la figure 2. Les étapes successives du procédé de décharge sont les suivantes :

- E1 : déconnexion électrique de la batterie haute tension 24 du réseau haute tension de consommation 12 par ouverture des commutateurs principaux 26 de la batterie haute tension 24,
- E2 : interruption de l'alimentation en hydrogène de la pile à combustible à hydrogène 30 par fermeture d'une vanne d'alimentation en hydrogène,
- E3 : décharge de l'énergie du circuit électrique 10 dans le stator de la machine électrique de traction 16.

L'étape E3 ci-dessus comporte les sous-étapes suivantes :

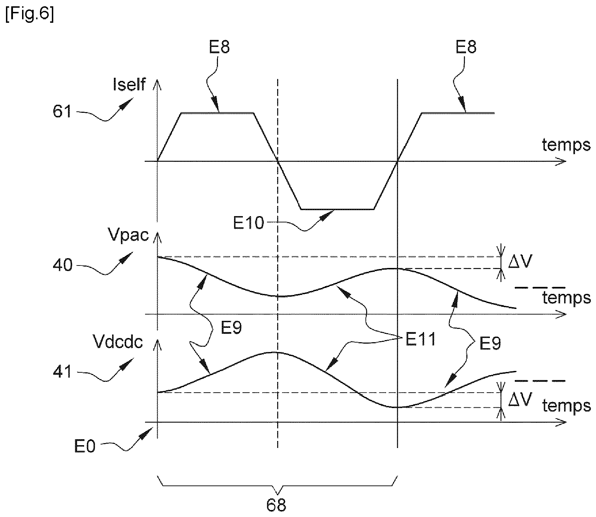

-- E4 : décharge de l'énergie résiduelle de la pile à combustible à hydrogène 30 par le convertisseur de tension continu / continu 32 piloté par le module de pilotage 48 du convertisseur de tension continu / continu 32 qui pilote le courant de décharge 43 jusqu'à une valeur seuil prédéterminée de la tension 40 de la pile à combustible à hydrogène 30,
-- E5 : déconnexion électrique du système prolongateur d'autonomie 28 du réseau haute tension de consommation 12 par ouverture des premier et deuxième commutateurs principaux 44, 46 du système prolongateur d'autonomie 28,
-- E6 : décharge de l'énergie stockée dans les capacités du réseau haute tension de consommation 12 dans le stator de la machine électrique de traction 16 via l'onduleur 14,
-- E7 : une sous-étape, qui est réalisée en parallèle des sous-étapes E5 à E6 ci-dessus, de décharge de l'énergie résiduelle de la pile à combustible à hydrogène 30 et de l'énergie stockée dans les capacités de filtrage primaire 56 et secondaire 58 du convertisseur de tension continu / continu 32 pilotée par le module de pilotage 48 du convertisseur de tension continu / continu 32 qui pilote le courant 61 de l'inductance de filtrage 60 selon la procédure d'autodécharge illustrée à la figure 6.

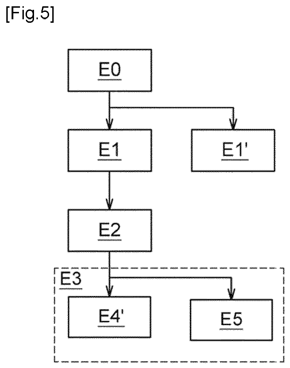

La figure 5 est un diagramme des étapes du procédé de décharge du circuit électrique 10 lors d'un **arrêt d'urgence** selon l'invention représenté à la figure 4. Les étapes successives du procédé de décharge sont les suivantes :

- E1 et E1' : ces deux étapes sont réalisées simultanément, E1 de déconnexion électrique de la batterie haute tension 24 du réseau haute tension de consommation 12 par l'ouverture des commutateurs principaux 26 de la batterie haute tension 24, et E1' de déconnexion électrique du système prolongateur d'autonomie 28 du réseau haute tension de consommation 12 par l'ouverture des premier et deuxième commutateurs 44, 46 du système prolongateur d'autonomie 28, ,
- E2 : interruption de l'alimentation en hydrogène de la pile à combustible à hydrogène 30 par fermeture d'une vanne d'alimentation en hydrogène
- E3 : décharge de l'énergie du circuit électrique 10, l'étape E3 comportant les sous-étapes suivantes :

  -- E4' : décharge, par l'onduleur 14, de l'énergie stockée dans les capacités du réseau haute tension de consommation 12 dans le stator de la machine électrique de traction 16,
  -- E5' : une sous-étape, qui est réalisée en parallèle de la sous-étape E4', de décharge de l'hydrogène résiduel contenu dans la pile à combustible à hydrogène 30 et de décharge de l'énergie stockée dans les capacités de filtrage primaire 56 et secondaire 58 du convertisseur de tension continu / continu 32 pilotée par le module de pilotage 48 du convertisseur de tension continu / continu 32 qui pilote le courant 61 de l'inductance de filtrage 60 selon la procédure d'autodécharge décrite à la figure 6.

Dans le procédé de décharge suite à un arrêt d'urgence décrit ci-dessus, les étapes E1 et E1' forment une unique étape de déconnexion. En effet, d'un point de vue sécuritaire, il est exigé de couper immédiatement toutes les sources d'énergie afin d'éliminer tous types de dangers (comme par exemple entretenir un départ d'incendie en alimentant un court-circuit via des isolants de câble endommagés créant un point de chaleur). De fait, les ordres de déconnexion de la pile à combustible à hydrogène 30 et de la batterie haute tension 24 arrivent simultanément.

La figure 6 est une représentation graphique du processus d'autodécharge des capacités de filtrage primaire 56 et secondaire 58 du système prolongateur d'autonomie réalisée aux étapes E7 et E4'.

La décharge de l'énergie résiduelle de la pile à combustible à hydrogène 30 s'effectue par des pertes énergétiques générées par des allers-retours successifs d'énergie entre les capacités de filtrage primaire 56 et secondaire 58 en pilotant le courant 61 de l'inductance de filtrage 60, un aller-retour constituant un cycle d'autodécharge 68.

Le processus d'autodécharge des capacités de filtrage primaire 56 et secondaire 58 du système prolongateur d'autonomie 28 représenté par le diagramme de la figure 6 comporte les étapes suivantes :
Premier cycle d'autodécharge 68 :
Etat du circuit électrique 10 à t = 0 :

- courant 61 de l'inductance de filtrage 60 : $I_{self} = 0$
- tension 40 de la pile à combustible à hydrogène 30 : $V_{pac} = V_{\max\ cycle\ 1}$
- tension de sortie 41 du convertisseur de tension continu / continu 32 : $V_{dcdc} = V_{\min\ cycle\ 1}$

E8 : pilotage du convertisseur de tension continu / continu 32 du système prolongateur d'autonomie 28 par le module de pilotage 48 du convertisseur de tension continu / continu 32 pour obtenir une valeur positive du courant 61 de l'inductance de filtrage 60,

E9 : courant 61 de l'inductance de filtrage 60 positif fourni par la capacité de filtrage primaire 56 et la pile à combustible 30 qui sont à la même tension 40 à la capacité de filtrage secondaire 58 qui est à la tension de sortie 41 du convertisseur de tension continu / continu 32 :

- décroissance de la valeur de la tension 40 de la pile à combustible à hydrogène 30
- croissance de la valeur de la tension de sortie 41 du convertisseur de tension continu / continu 32 car la valeur du courant 61 de l'inductance de filtrage 60 est positive .

Etat à t = 1/2 cycle d'autodécharge 68 :

- courant 61 de l'inductance de filtrage 60 : $I_{self} = 0$
- tension 40 de la pile à combustible à hydrogène 30 : $V_{pac} = V_{pac\ min\ 1}$
- tension de sortie 41 du convertisseur de tension continu / continu 32 : $V_{dcdc} = V_{dcdc\ max\ 1}$

E10 : pilotage du convertisseur de tension continu / continu 32 continu du système prolongateur d'autonomie 28 via le module de pilotage 48 du convertisseur de tension continu / continu 32 pour obtenir une valeur négative du courant 61 de l'inductance de filtrage 60,

E11 : courant 61 de l'inductance de filtrage 60 négatif fourni par la capacité de filtrage secondaire 58 à la capacité de filtrage primaire 56 :

- décroissance de la valeur de la tension de sortie 41 du convertisseur de tension continu / continu 32,
- croissance de la valeur de la tension 40 de la la capacité primaire 56 car la valeur du courant 61 de l'inductance de filtrage 60 est négative .

Etat à t = 1 cycle d'autodécharge 68 :

- courant 61 de l'inductance de filtrage 60 : $I_{self}$ = 0
- tension 40 de la pile à combustible à hydrogène 30 : $V_{pac}$ = $V_{pac\,max\,2}$
- tension de sortie 41 du convertisseur de tension continu / continu 32 :

$$V_{dcdc} = V_{dcdc\,\min\,2}$$

avec $V_{pac\,max\,2}$ < $V_{pac\,max\,1}$, $V_{dcdc\,min\,2}$ < $V_{dcdc\,min\,1}$ $V_{pac\,max\,1}$ - $V_{pac\,max\,2}$ = $\Delta V_{pac}$ et $V_{dcdc\,min\,1}$ - $V_{dcdc\,min\,2}$ = $\Delta V_{dcdc}$

A chaque cycle d'autodécharge 68, la tension 40 de la pile à combustible à hydrogène 30 diminue et suite à plusieurs cycles d'autodécharge 68 d'une durée de l'ordre de quelques millisecondes, la pile à combustible à hydrogène 30 est complètement déchargée. La durée de la décharge totale de la pile à combustible à hydrogène 30 est inférieure à une seconde. Chaque cycle d'autodécharge 68 génère des pertes énergétiques à l'étape E11 d'une valeur de tension 40 de la pile à combustible à hydrogène 30 $\Delta V_{pac}$ égale à la différence de tension 40 de la pile à combustible à hydrogène 30 $V_{pac\,max\,1}$ au début et à la fin $V_{pac\,max\,2}$ d'un même cycle d'autodécharge 68. Plusieurs cycles d'autodécharge 68 vont se succéder jusqu'à atteindre une valeur de tension 40 de la pile à combustible 30 faible. Selon un exemple de réalisation de l'invention, le convertisseur de tension continu / continu 32 est configuré pour obtenir une valeur de tension des capacités de filtrage primaire 56 et secondaire 58 inférieure à 60 volts, c'est-à-dire une valeur de tension de sécurité.

Les deux transistors 62 du module de pilotage 48 du convertisseur de tension continu / continu 32 sont configurés pour asservir le courant 61 de l'inductance de filtrage 60 entre l'étage d'entrée basse tension 66 et l'étage de sortie haute tension 64 du convertisseur de tension continu / continu 32 dans un sens positif ou un sens négatif et à une valeur de consigne du courant 61 de l'inductance de filtrage 60 en fonction des valeurs de tension 40, 41 des capacités de filtrage primaire 56 et secondaire 58.

Le module de pilotage 48 du convertisseur de tension continu / continu 32 est configuré pour piloter les allers-retours successifs d'énergie entre les capacités de filtrage primaire 56 et secondaire 58 en imposant la valeur de consigne du courant 61 de l'inductance de filtrage 60.

Par conséquent, c'est le convertisseur de tension continu / continu 32 qui accumule les pertes énergétiques générées et qui pilote les allers-retours énergétiques entre l'étage d'entrée basse tension 66 et l'étage de sortie haute tension 64 du convertisseur de tension continu / continu 32.

Cette procédure d'autodécharge des capacités de filtrage primaire 56 et secondaire 58 est également utilisée lors d'un arrêt volontaire de l'alimentation de la pile à combustible à hydrogène 30 correspondant à l'étape E7.

De plus, lors d'un arrêt volontaire de l'alimentation de la pile à combustible à hydrogène 30 cette procédure d'autodécharge est aussi adaptée à l'étape E4 pour piloter le courant de décharge 43 de l'énergie résiduelle en fonction de la perte de pression d'hydrogène à l'intérieur de la pile à combustible à hydrogène 30, et donc pour assurer une réaction électrochimique optimale malgré la quantité décroissante d'hydrogène présente à l'intérieur de la pile à combustible à hydrogène 30.

Dans la présente invention, la fonction de décharge de l'énergie dite « résiduelle » de la pile à combustible à hydrogène 30 est assurée par le convertisseur de tension continu / continu 32 constituant un moyen de décharge interne.

La décharge de l'hydrogène résiduel contenu à l'intérieur de la pile à combustible à hydrogène 30 par un élément structurel du système prolongateur d'autonomie 28 permet de préserver l'architecture initiale du système prolongateur d'autonomie 28. Le convertisseur de tension continu / continu 32 remplit ainsi à lui seule la fonction de décharge de la pile à combustible à hydrogène 30 et dispense de l'ajout de composants dédiés à la fonction de décharge, tels que des commutateurs et des éléments dissipatifs supplémentaires.

Une telle architecture assure également un pilotage précis du courant de décharge 43 en permettant de décharger l'énergie résiduelle de la pile à combustible à hydrogène 30 directement en fonction de la quantité d'énergie résiduelle restante (masse et pression). Par conséquent, le courant est piloté en fonction des pressions partielles d'hydrogène restantes à l'intérieur de la pile à combustible à hydrogène 30 de manière à obtenir la meilleure stœchiométrie et ainsi favoriser la durée de vie de la pile à combustible à hydrogène 30.

LEGENDE

10 : circuit électrique
12 : réseau haute tension de consommation
14 : onduleur
16 : machine électrique de traction
18 : convertisseur de tension du réseau haute tension de consommation
20 : équipement annexe
21 : boîtier de distribution
22 : réseau d'alimentation électrique
24 : batterie haute tension
26 : commutateur principal de la batterie haute tension
28 : système prolongateur d'autonomie

30 : pile à combustible à hydrogène

32 : convertisseur de tension continu / continu du système prolongateur d'autonomie

34 : circuit de précharge

36 : résistance de précharge

38 : commutateur de précharge

40 : tension de la pile à combustible

41 : tension de sortie du convertisseur de tension continu / continu

42 : courant de la pile à combustible

43 : courant de décharge

44 : premier commutateur principal

46 : deuxième commutateur principal

48 : module de pilotage du convertisseur de tension continu / continu

50 : état de la pile à combustible

52 : consigne de courant de la pile à combustible

54 : consigne de courant de décharge

56 : capacité de filtrage primaire

58 : capacité de filtrage secondaire

60 : inductance de filtrage

61 : courant de l'inductance de filtrage

62 : transistor

64 : étage de sortie haute tension

66 : étage d'entrée basse tension

68 : cycle d'autodécharge

**Revendications**

1. Procédé de décharge du circuit électrique (10) d'un véhicule automobile comportant au moins une machine électrique de traction (16) du véhicule équipé :

 - d'un réseau d'alimentation électrique (22) comportant :

  -- une batterie haute tension (24),
  -- un système prolongateur d'autonomie (28) comprenant une pile à combustible à hydrogène (30) qui est associée à un convertisseur de tension continu / continu (32) lui -même comportant une inductance de filtrage (60) traversée par un courant (61) de l'inductance de filtrage (60), une capacité de filtrage primaire (56) qui est à la tension (40) de la pile à combustible à hydrogène (30), et une capacité de filtrage secondaire (58) qui est à la tension de (41) sortie du convertisseur de tension continu / continu (32),

 - d'un réseau haute tension de consommation (12), alimenté par le réseau d'alimentation électrique (22), comprenant la au moins une machine électrique de traction (16) du véhicule automobile associée à un onduleur (14) et des équipements annexes (20),
 - et d'un module de pilotage (48),

le procédé de décharge comprenant les étapes successives :

 - (E0) d'arrêt du véhicule automobile,
 - (E1) de déconnexion électrique de la batterie haute tension (24) du réseau haute tension de consommation (12),
 - (E2) d'interruption de l'alimentation en hydrogène de la pile à combustible à hydrogène (30), et
 - (E3) de décharge de l'énergie du circuit électrique (10) dans le bobinage statorique de la machine électrique de traction (16) ,

dans lequel l'étape (E3) de décharge de l'énergie du circuit électrique (10) est réalisée par pilotage du convertisseur de tension continu / continu (32) au moyen du module de pilotage (48), **caractérisé en ce que** l'étape (E0) d'arrêt du véhicule correspond à un arrêt volontaire du véhicule automobile, **en ce que** l'étape (E3) de décharge de l'énergie du circuit électrique (10) comporte les sous-étapes successives suivantes :

 - (E4) de décharge de l'énergie produite par consommation de l'hydrogène résiduel contenu dans la pile à combustible à hydrogène (30) par le convertisseur de tension continu / continu (32) par pilotage d'un courant de décharge (43) par le module de pilotage (48) jusqu'à une valeur seuil de tension (40) prédéterminée de la pile à combustible à hydrogène (30),
 - (E5) de déconnexion électrique du système prolongateur d'autonomie (28) du réseau haute tension de consommation (12),
 - (E6) de décharge de l'énergie des capacités du réseau haute tension de consommation (12) dans le stator de la machine électrique de traction (16) par l'onduleur (14),

et **en ce que** l'étape (E3) de décharge de l'énergie du circuit électrique (10) comporte une sous-étape (E7), qui est réalisée en parallèle des sous-étapes (E5) à (E6), de décharge de l'énergie des capacités de filtrage primaire (56) et secondaire (58) du convertisseur de tension continu / continu (32) par pilotage du courant (61) de l'inductance de filtrage (60) par le module de pilotage (48).

2. Procédé de décharge du circuit électrique (10) d'un véhicule automobile comportant au moins une machine électrique de traction (16) du véhicule équipé :

 - d'un réseau d'alimentation électrique (22) comportant :

-- une batterie haute tension (24),
-- un système prolongateur d'autonomie (28) comprenant une pile à combustible à hydrogène (30) qui est associée à un convertisseur de tension continu / continu (32) lui -même comportant une inductance de filtrage (60) traversée par un courant (61) de l'inductance de filtrage (60), une capacité de filtrage primaire (56) qui est à la tension (40) de la pile à combustible à hydrogène (30), et une capacité de filtrage secondaire (58) qui est à la tension de (41) sortie du convertisseur de tension continu / continu (32),

- d'un réseau haute tension de consommation (12), alimenté par le réseau d'alimentation électrique (22), comprenant la au moins une machine électrique de traction (16) du véhicule automobile associée à un onduleur (14) et des équipements annexes (20),
- et d'un module de pilotage (48),
le procédé de décharge comprenant les étapes successives :

- (E0) d'arrêt du véhicule automobile,
- (E1) de déconnexion électrique de la batterie haute tension (24) du réseau haute tension de consommation (12),
- (E2) d'interruption de l'alimentation en hydrogène de la pile à combustible à hydrogène (30), et
- (E3) de décharge de l'énergie du circuit électrique (10) dans le bobinage statorique de la machine électrique de traction (16) ,

dans lequel l'étape (E3) de décharge de l'énergie du circuit électrique (10) est réalisée par pilotage du convertisseur de tension continu / continu (32) au moyen du module de pilotage (48), **caractérisé en ce que** l'étape (E0) d'arrêt du véhicule correspond à un arrêt d'urgence du véhicule automobile, **en ce que** le procédé de décharge du circuit électrique (10) comporte une étape (E1') de déconnexion électrique du système prolongateur d'autonomie (28) du réseau haute tension (12) réalisée simultanément avec l'étape (E1) de déconnexion électrique de la batterie haute tension (24) du réseau haute tension de consommation (12), **en ce que** l'étape (E3) de décharge de l'énergie du circuit électrique (10) comporte les sous-étapes suivantes :

- (E4') de décharge de l'énergie des capacités du réseau haute tension de consommation (12) dans le stator de la machine électrique de traction (16) par l'onduleur (14),
- et **en ce que** l'étape (E3) de décharge de l'énergie du circuit électrique (10) comporte une sous-étape (E5'), qui est réalisée en parallèle de la sous-étape (E4'), de décharge de l'hydrogène résiduel contenu dans la pile à combustible à hydrogène (30) et de décharge de l'énergie des capacités de filtrage primaire (56) et secondaire (58) du convertisseur de tension continu / continu (32) par pilotage du courant (61) de l'inductance de filtrage (60) par le module de pilotage (48).

3. Procédé de décharge du circuit électrique (10) d'un véhicule automobile selon l'une des revendications 1 ou 2, **caractérisé en ce que** le processus pilotage du courant (61) de l'inductance de filtrage (60) par le module de pilotage (48) est configuré pour atteindre une valeur faible de la tension (40) de la pile à combustible à hydrogène (30) au moyen d'une succession de n cycles d'autodécharge (68) des capacités de filtrage primaire (56) et secondaire (58) du système prolongateur d'autonomie (28).

4. Procédé de décharge du circuit électrique (10) d'un véhicule automobile selon la revendication 3, caractérisé en ce chaque cycle d'autodécharge (68) des capacités de filtrage primaire (56) et secondaire (58) du système prolongateur d'autonomie (28) comporte :

- une étape (E8) de pilotage du convertisseur de tension continu / continu (32) du système prolongateur d'autonomie (28) par le module de pilotage (48) du convertisseur de tension continu / continu (32) pour obtenir une valeur positive du courant (61) de l'inductance de filtrage (60), la valeur positive du courant (61) de l'inductance de filtrage (60) fourni par la capacité de filtrage primaire (56) à la capacité de filtrage secondaire (58) provoquant (E9) :

-- la décroissance de la valeur de la tension (40) de la pile à combustible à hydrogène (30), et
-- la croissance de la valeur de la tension de sortie (41) du convertisseur de tension continu / continu (32) ; et

- une étape (E10) de pilotage du convertisseur de tension continu / continu (32) du système prolongateur d'autonomie (28) par le module de pilotage (48) pour obtenir une valeur négative du courant (61) de l'inductance de filtrage (60), la valeur négative du courant (61) de l'inductance de filtrage (60) fourni par la capacité de filtrage secondaire (58) à la capacité de filtrage primaire (56) provoquant (E11) :

-- la décroissance de la valeur de la tension de sortie (41) du convertisseur de tension continu / continu (32), et
-- la croissance de la valeur de la tension (40) de la capacité de filtrage primaire (56).

5. Procédé de décharge du circuit électrique (10) d'un véhicule automobile selon la revendication 4, **caractérisé en ce que** le processus de pilotage du courant (61) de l'inductance de filtrage (60) par le module de pilotage (48) est configuré pour que la valeur de la tension (40) de la pile à combustible à hydrogène (30) à la fin d'un cycle de n+1 autodécharges (68) soit inférieure à la valeur de la tension (40) de la pile à combustible à hydrogène (30) à la fin du cycle de n autodécharges (68).

**Patentansprüche**

1. Verfahren zum Entladen des elektrischen Kreises (10) eines Kraftfahrzeugs, das mindestens eine elektrische Antriebsmaschine (16) des Fahrzeugs umfasst, das mit Folgendem ausgestattet ist:

- einem elektrischen Versorgungsnetz (22), umfassend:

-- eine Hochspannungsbatterie (24),
-- ein Reichweitenverlängerungssystem (28), umfassend eine Wasserstoff-Brennstoffzelle (30), die mit einem Gleichspannungs/Gleichspannungs-Wandler (32) gekoppelt ist, der seinerseits eine Filterinduktivität (60) umfasst, die von einem Strom (61) der Filterinduktivität (60) durchflossen wird, eine primäre Filterkapazität (56), die an der Spannung (40) der Wasserstoff-Brennstoffzelle (30) liegt, und eine sekundäre Filterkapazität (58), die an der Ausgangsspannung (41) des Gleichspannungs/Gleichspannungs-Wandlers (32) liegt,

- einem Hochspannungsverbrauchsnetz (12), das von dem elektrischen Versorgungsnetz (22) versorgt wird, umfassend die mindestens eine elektrische Antriebsmaschine (16) des Kraftfahrzeugs, die mit einem Wechselrichter (14) gekoppelt ist, und Zusatzausrüstungen (20),
- und einem Steuerungsmodul (48),

wobei das Verfahren zum Entladen die folgenden Schritte umfasst:

- (E0) Ausschalten des Kraftfahrzeugs,
- (E1) elektrisches Trennen der Hochspannungsbatterie (24) von dem Hochspannungsverbrauchsnetz (12),
- (E2) Unterbrechen der Wasserstoffversorgung der Wasserstoff-Brennstoffzelle (30), und
- (E3) Entladen der Energie des elektrischen Kreises (10) in die Statorwicklung der elektrischen Antriebsmaschine (16), wobei der Schritt (E3) des Entladens der Energie des elektrischen Kreises (10) durch Steuern des Gleichspannungs/Gleichspannungs-Wandlers (32) mittels des Steuerungsmoduls (48) ausgeführt wird, **dadurch gekennzeichnet, dass** der Schritt (E0) des Ausschaltens des Fahrzeugs einem absichtlichen Ausschalten des Kraftfahrzeugs entspricht, dass der Schritt (E3) des Entladens der Energie des elektrischen Kreises (10) die folgenden aufeinanderfolgenden Teilschritte umfasst:

- (E4) Entladen der durch Verbrauchen des in der Wasserstoff-Brennstoffzelle (30) enthaltenen Restwasserstoffs erzeugten Energie durch den Gleichspannungs/Gleichspannungs-Wandler (32) durch Steuern eines Entladestroms (43) durch das Steuerungsmodul (48), bis ein vorbestimmter Spannungsschwellenwert (40) der Wasserstoff-Brennstoffzelle (30) erreicht ist,
- (E5) elektrisches Trennen des Reichweitenverlängerungssystems (28) von dem Hochspannungsverbrauchsnetz (12),
- (E6) Entladen der Energie der Kapazitäten des Hochspannungsverbrauchsnetzes (12) in den Stator der elektrischen Antriebsmaschine (16) durch den Wechselrichter (14),

und dadurch, dass der Schritt (E3) des Entladens der Energie des elektrischen Kreises (10) einen parallel zu den Teilschritten (E5) bis (E6) ausgeführten Teilschritt (E7) des Entladens der Energie der primären (56) und sekundären (58) Filterkapazitäten des Gleichspannungs/Gleichspannungs-Wandlers (32) durch Steuern des Stroms (61) der Filterinduktivität (60) durch das Steuerungsmodul (48) umfasst.

2. Verfahren zum Entladen des elektrischen Kreises (10) eines Kraftfahrzeugs, das mindestens eine elektrische Antriebsmaschine (16) des Fahrzeugs umfasst, das mit Folgendem ausgestattet ist:

- einem elektrischen Versorgungsnetz (22), umfassend:

-- eine Hochspannungsbatterie (24),
-- ein Reichweitenverlängerungssystem (28), umfassend eine Wasserstoff-Brennstoffzelle (30), die mit einem Gleichspannungs/Gleichspannungs-Wandler (32) gekoppelt ist, der seinerseits eine Filterinduktivität (60) umfasst, die von einem Strom (61) der Filterinduktivität (60) durchflossen wird, eine primäre Filterkapazität (56), die an der Spannung (40) der Wasserstoff-Brennstoffzelle (30) liegt, und eine sekundäre Filterkapazität (58), die an der Ausgangsspannung (41) des Gleichspannungs/Gleichspannungs-Wandlers (32) liegt,

- einem Hochspannungsverbrauchsnetz (12), das von dem elektrischen Versorgungsnetz (22) versorgt wird, umfassend die mindestens eine elektrische Antriebsmaschine (16) des Kraftfahrzeugs, die mit einem Wechselrichter (14) gekoppelt ist, und Zusatzausrüstungen (20),
- und einem Steuerungsmodul (48),

wobei das Verfahren zum Entladen die folgenden Schritte umfasst:

- (E0) Ausschalten des Kraftfahrzeugs,
- (E1) elektrisches Trennen der Hochspannungsbatterie (24) von dem Hochspannungsverbrauchsnetz (12),
- (E2) Unterbrechen der Wasserstoffversorgung der Wasserstoff-Brennstoffzelle (30), und
- (E3) Entladen der Energie des elektrischen Kreises (10) in die Statorwicklung der elektrischen Antriebsmaschine (16), wobei der Schritt (E3) des Entladens der Energie des elektrischen Kreises (10) durch Steuern des Gleichspannungs/Gleichspannungs-Wandlers (32) mittels des Steuerungsmoduls (48) ausgeführt wird, **dadurch gekennzeichnet, dass** der Schritt (E0) des Ausschaltens des Fahrzeugs einer Notausschaltung des Kraftfahrzeugs entspricht, dass das Verfahren zum Entladen des elektrischen Kreises (10) einen Schritt (E1') des elektrischen Trennens des Reichweitenverlängerungssystems (28) von dem Hochspannungsnetz (12) umfasst, der gleichzeitig mit dem Schritt (E1) des elektrischen Trennens der Hochspannungsbatterie (24) vom Hochspannungsverbrauchsnetz (12) ausgeführt wird, dass der Schritt (E3) des Entladens der Energie des elektrischen Kreises (10) die folgenden Teilschritte umfasst:

- (E4') Entladen der Energie der Kapazitäten des Hochspannungsverbrauchsnetzes (12) in den Stator der elektrischen Antriebsmaschine (16) durch den Wechselrichter (14),
- und dadurch, dass der Schritt (E3) des Entladens der Energie des elektrischen Kreises (10) einen parallel zu dem Teilschritt (E4') ausgeführten Teilschritt (E5') des Entladens des in der Wasserstoff-Brennstoffzelle (30) enthaltenen Restwasserstoffs und des Entladens der Energie der primären (56) und sekundären (58) Filterkapazitäten des Gleichspannungs/GleichspannungsWandlers (32) durch Steuern des Stroms (61) der Filterinduktivität (60) durch das Steuerungsmodul (48) umfasst.

3.  Verfahren zum Entladen des elektrischen Kreises (10) eines Kraftfahrzeugs nach einem der Ansprüche 1 oder 2, **dadurch gekennzeichnet, dass** das Verfahren zum Steuern des Stroms (61) der Filterinduktivität (60) durch das Steuerungsmodul (48) dazu ausgestaltet ist, einen niedrigen Wert der Spannung (40) der Wasserstoff-Brennstoffzelle (30) mittels einer Folge von n Selbstentladungszyklen (68) der primären (56) und sekundären (58) Filterkapazitäten des Reichweitenverlängerungssystems (28) zu erreichen.

4.  Verfahren zum Entladen des elektrischen Kreises (10) eines Kraftfahrzeugs nach Anspruch 3, **dadurch gekennzeichnet, dass** jeder Selbstentladungszyklus (68) der primären (56) und sekundären (58) Filterkapazitäten des Reichweitenverlängerungssystems (28) umfasst:

- einen Schritt (E8) des Steuerns des Gleichspannungs/Gleichspannungs-Wandlers (32) des Reichweitenverlängerungssystems (28) durch das Steuerungsmodul (48) des Gleichspannungs/Gleichspannungs-Wandlers (32), um einen positiven Wert des Stroms (61) der Filterinduktivität (60) zu erhalten, wobei der positive Wert des Stroms (61) der Filterinduktivität (60), der von der primären Filterkapazität (56) an die sekundäre Filterkapazität (58) abgegeben wird, Folgendes bewirkt (E9):

-- das Sinken des Werts der Spannung (40) der Wasserstoff-Brennstoffzelle (30), und
-- das Steigen des Werts der Ausgangsspannung (41) des Gleichspannungs/-Gleichspannungs-Wandlers (32); und

- einen Schritt (E10) des Steuerns des Gleichspannungs/Gleichspannungs-Wandlers (32) des Reichweitenverlängerungssystems (28) durch das Steuerungsmodul (48), um einen negativen Wert des Stroms (61) der Filterinduktivität (60) zu erhalten, wobei der negative Wert des Stroms (61) der Filterinduktivität (60), der von der sekundären Filterkapazität (58) an die primäre Filterkapazität (56) abgegeben wird, Folgendes bewirkt (E11):

-- das Sinken des Werts der Ausgangsspannung (41) des Gleichspannungs-/ Gleichspannungs-Wandlers (32), und

-- das Steigen des Werts der Spannung (40) der primären Filterkapazität (56).

5. Verfahren zum Entladen des elektrischen Kreises (10) eines Kraftfahrzeugs nach Anspruch 4, **dadurch gekennzeichnet, dass** das Verfahren zum Steuern des Stroms (61) der Filterinduktivität (60) durch das Steuerungsmodul (48) dazu ausgestaltet ist, dass der Wert der Spannung (40) der Wasserstoff-Brennstoffzelle (30) am Ende eines Zyklus aus n+1 Selbstentladungen (68) geringer als der Wert der Spannung (40) der Wasserstoff-Brennstoffzelle (30) am Ende des Zyklus aus n Selbstentladungen (68) ist.

**Claims**

1. Method for discharging the electrical circuit (10) of a motor vehicle comprising at least one electric traction machine (16) of the vehicle equipped with:

- an electrical power supply network (22) comprising:

-- a high-voltage battery (24),
-- a range extender system (28) comprising a hydrogen fuel cell (30) that is associated with a DC-DC voltage converter (32) itself comprising a filtering inductor (60) traversed by a current (61) of the filtering inductor (60), a primary filtering capacitor (56) that is at the voltage (40) of the hydrogen fuel cell (30), and a secondary filtering capacitor (58) that is at the output voltage (41) of the DC-DC voltage converter (32),

- a high-voltage consumption network (12), powered by the electrical power supply network (22), comprising the at least one electric traction machine (16) of the motor vehicle associated with an inverter (14) and ancillary equipment (20),
- and a control module (48),

the discharging method comprising the successive steps of:

- (E0) stopping the motor vehicle,
- (E1) electrically disconnecting the high-voltage battery (24) from the high-voltage consumption network (12),
- (E2) interrupting the hydrogen supply of the hydrogen fuel cell (30), and
- (E3) discharging the energy of the electrical circuit (10) into the stator winding of the electric traction machine (16), wherein the step (E3) of discharging the energy of the electrical circuit (10) is carried out by controlling the DC-DC voltage converter (32) by means of the control module (48), **characterized in that** the step (E0) of stopping the vehicle corresponds to the voluntary stopping of the motor vehicle, **in that** the step (E3) of discharging the energy of the electrical circuit (10) comprises the following successive sub-steps:
- (E4) discharging the energy produced by consuming the residual hydrogen contained in the hydrogen fuel cell (30) by means of the DC-DC voltage converter (32) by controlling a discharging current (43) by means of the control module (48) until a predetermined voltage threshold value (40) of the hydrogen fuel cell (30) is reached,
- (E5) electrically disconnecting the range extender system (28) from the high-voltage consumption network (12),
- (E6) discharging the energy from the capacitors of the high-voltage consumption network (12) into the stator of the electric traction machine (16) by means of the inverter (14),

and **in that** the step (E3) of discharging the energy of the electrical circuit (10) comprises a sub-step (E7), which is carried out at the same time as the sub-steps (E5) to (E6), of discharging the energy of the primary (56) and secondary (58) filtering capacitors of the DC-DC voltage converter (32) by controlling the current (61) of the filtering inductor (60) by means of the control module (48).

2. Method for discharging the electrical circuit (10) of a motor vehicle comprising at least one electric traction machine (16) of the vehicle equipped with:

- an electrical power supply network (22) comprising:

-- a high-voltage battery (24),
-- a range extender system (28) comprising a hydrogen fuel cell (30) that is associated with a DC-DC voltage converter (32) itself comprising a filtering inductor (60) traversed by a current (61) of the filtering inductor (60), a primary filtering capacitor (56) that is at the voltage (40) of the hydrogen fuel cell (30), and a secondary filtering capacitor (58) that is at the output voltage (41) of the DC-DC voltage converter (32),

- a high-voltage consumption network (12), powered by the electrical power supply network (22), comprising the at least one electric traction machine (16) of the motor vehicle associated with an inverter (14) and ancillary equipment (20),
- and a control module (48),

the discharging method comprising the successive steps of:

- (E0) stopping the motor vehicle,
- (E1) electrically disconnecting the high-voltage battery (24) from the high-voltage consumption network (12),
- (E2) interrupting the hydrogen supply of the hydrogen fuel cell (30), and
- (E3) discharging the energy of the electrical circuit (10) into the stator winding of the electric traction machine (16), wherein the step (E3) of discharging the energy of the electrical circuit (10) is carried out by controlling the DC-DC voltage converter (32) by means of the control module (48), **characterized in that** the step (E0) of stopping the vehicle corresponds to an emergency stop of the motor vehicle, **in that** the method for discharging the electrical circuit (10) comprises a step (E1') of electrically disconnecting the range extender system (28) from the high-voltage network (12) that is carried out simultaneously with the step (E1) of electrically disconnecting the high-voltage battery (24) from the high-voltage consumption network (12), **in that** step (E3) of discharging the energy of the electrical circuit (10) comprises the following sub-steps:
- (E4') discharging the energy of the capacitors of the high-voltage consumption network (12) into the stator of the electric traction machine (16) by means of the inverter (14),
- and **in that** the step (E3) of discharging the energy of the electrical circuit (10) comprises a sub-step (E5'), which is carried out at the same time as the sub-step (E4'), of discharging the residual hydrogen contained in the hydrogen fuel cell (30) and of discharging the energy of the primary (56) and secondary (58) filtering capacitors of the DC-DC voltage converter (32) by controlling the current (61) of the filtering inductor (60) by means of the control module (48).

3. Method for discharging the electrical circuit (10) of a motor vehicle according to one of Claims 1 and 2, **characterized in that** the process for controlling the current (61) of the filtering inductor (60) by means of the control module (48) is configured to reach a low value of the voltage (40) of the hydrogen fuel cell (30) by means of a series of n self-discharging cycles (68) of the primary (56) and secondary (58) filtering capacitors of the range extender system (28).

4. Method for discharging the electrical circuit (10) of a motor vehicle according to Claim 3, **characterized in that** each self-discharging cycle (68) of the primary (56) and secondary (58) filtering capacitors of the range extender system (28) comprises:

- a step (E8) of controlling the DC-DC voltage converter (32) of the range extender system (28) by means of the control module (48) of the DC-DC voltage converter (32) in order to obtain a positive value of the current (61) of the filtering inductor (60), with the positive value of the current (61) of the filtering inductor (60) supplied by the primary filtering capacitor (56) to the secondary filtering capacitor (58) causing (E9):

-- a reduction of the value of the voltage (40) of the hydrogen fuel cell (30), and
-- an increase of the value of the output voltage (41) of the DC-DC voltage converter (32); and
- a step (E10) of controlling the DC-DC voltage converter (32) of the range extender system (28) by means of the control module (48) in order to obtain a negative value of the current (61) of the filtering inductor (60), with the negative value of the current (61) of the filtering inductor (60) supplied by the secondary filtering capacitor (58) to the primary filtering capacitor (56) causing (E11):

-- a reduction of the value of the output voltage (41) of the DC-DC voltage converter (32), and
-- an increase of the value of the voltage (40) of the primary filtering capacitor (56).

5. Method for discharging the electrical circuit (10) of a motor vehicle according to Claim 4, **characterized in that** the process for controlling the current (61) of the filtering inductor (60) by means of the control module (48) is configured so that the value of the voltage (40) of the hydrogen fuel cell (30) at the end of a cycle of n+1 self-discharging cycles (68) is less than the value of the voltage (40) of the hydrogen fuel cell (30) at the end of the cycle of n self-discharging cycles (68).

[Fig.1]

[Fig.2]

[Fig.3]

[Fig.4]

[Fig.5]

EP 4 259 472 B1

[Fig.6]

20

**RÉFÉRENCES CITÉES DANS LA DESCRIPTION**

**Documents brevets cités dans la description**

- US 5105142 A
- US 2019379070 A

- WO 2020020524 A